# EUROPEAN PATENT SPECIFICATION

(11) **EP 2 101 258 B1**
(45) Date of publication and mention of the grant of the patent: **25.05.2016**
(21) Application number: 08152533.9
(22) Date of filing: 10.03.2008
(51) Int. Cl.: G06F 9/345, G06F 9/38

(54) **Enhanced look-up table signal processing**
Signalverarbeitung mit verbesserten Verweistabellen
Traitement du signal au moyen d'un tableau de recherche amélioré

(43) Date of publication of application: 16.09.2009
(73) Proprietor: Mobileye Vision Technologies Ltd., Jerusalem 9777513 (IL)
(72) Inventor: Navon, Mois, Efrat (IL); Kreinin, Yossi, Jerusalem (IL); Sixou, Emmanuel, Jerusalem (IL); Sajman, Roman, Jerusalem (IL)
(74) Representative: Jehan, Robert

(56) References cited:
- US-A- 5 083 267
- US-B1- 6 446 198
- "PIPELINED PROCESSOR WITHOUT WAIT STATE" IBM TECHNICAL DISCLOSURE BULLETIN, IBM CORP. NEW YORK, US, vol. 31, no. 10, 1 March 1989 (1989-03-01), pages 138-140, XP000119218 ISSN: 0018-8689
- SHIN Y-C ET AL.: "SPECIAL PURPOSE REGISTER ARRAY FOR REAL-TIME IMAGE PROCESSING" FOURTH ANNUAL IEEE INTERNATIONAL ASIC CONFERENCE AND EXHIBIT, 23 September 1991 (1991-09-23), - 27 September 1991 (1991-09-27) pages P18-1.1-P18-1.4, XP002486783 Rochester, US

## Description

### FIELD AND BACKGROUND OF THE INVENTION

The present invention relates to signal processors and, more particularly, to a device which includes an enhanced look-up table for use in digital signal processing. Specifically, the device includes features appropriate for efficient image processing.

Digital signal processing (DSP) includes analysis and processing of signals in a digital representation. DSP includes audio and speech signal processing, sonar and radar signal processing, sensor array processing; spectral estimation, statistical signal processing, image processing, signal processing for communications, biomedical signal processing, seismic data processing, etc.

Since the goal of DSP is usually to measure or filter continuous real-world analog signals, the first step is usually to convert the signal from an analog to a digital form, by using an analog to digital converter. If the required output signal is another analog output signal, then a digital to analog converter is required at the output.

Algorithms required for DSP are sometimes performed using specialized microprocessors called digital signal processors. Digital signal processors process signals in real time and are generally designed as application-specific integrated circuits (ASICs). When flexibility and rapid development are more important than unit costs at high volume, DSP algorithms may also be implemented using field-programmable gate arrays (FPGAs).

### (from http://en.wikipedia.org/wiki/Digital_signal_processing)

In computer science, a lookup table in digital processing is an array of registers or memory buffer which allows specific access, i.e. read and write commands based on previously known addresses of the registers and/or memory elements. A lookup table is for example, an associative array used to replace a runtime computation with a simpler lookup operation. Through use of a lookup table, rather than performing the computation each time an entry is accessed, a speed gain can be significant, since retrieving a value from memory is often faster than undergoing a time consuming computation.

A classic example is a trigonometry calculation i.e. calculating the sine of an angle. To avoid unnecessary calculations, a number of sine values are pre-calculated, for example for each whole number of degrees. Later, when the program requires the sine of an angle, the lookup table is used to retrieve the sine of a nearby angle from a memory address instead of calculating it using the mathematical formula.

Before the advent of computers, similar tables were used by people to speed up hand calculations. Particularly prevalent were tables of values for trigonometry, logarithms, and statistical density functions.

In image processing, lookup tables (LUT) are often used to provide an output value for a range of index values. One common LUT is a colormap or palette used to determine colors and intensity values with which a particular image is displayed. (from http://en.wikipedia.org/wiki/Look-up_table)

In statistics, a histogram is a data structure or table in which frequency of occurrence of data is tabulated. The possible data values are divided into several categories or bins and the frequency of occurrence is tabulated for each bin. A histogram is often represented graphically as a bar graph. In image processing, image data is typically tabulated in a histogram based on frequency of occurrence in bins of gray scale or color information.

The symbol "x" is used to denote hexadecimal notation as in "xFF".

The terms "location", "index" and "address" are used herein interchangeably.

US-6,446,198 discloses a lookup operation carried out on a data table by logically dividing the data table into a number of smaller sets of data that can be indexed with a single byte of data. Each set of data consists of two vectors, which constitute the operands for a permute instruction. Only a limited number of bits are required to index into the table during the execution of this instruction. The remaining bits of each index are used as masks into a series of select instructions. The select instruction chooses between two vector components, based on the mask, and places the selected components into a new vector. The mask is generated by shifting one of the higher order bits of the index to the most significant position, and then propagating that bit throughout a byte, for example by means of an arithmetic shift. This procedure is carried out for all of the index bytes in the vector, to generate a select mask. The select mask is then used during a select operation, to choose between the results of permute instructions on different ones of the logically divided sets of data. Multi-byte table entries are retrieved by replicating each index value and adding consecutive values to form multiple consecutive index values that are then used in multiple permute operations.

### SUMMARY OF THE INVENTION

According to an aspect of the present invention, there is provided an electronic look-up device implemented on a semiconductor chip as specified in claim 1.

According to the present invention there is provided an electronic device implemented on a semiconductor chip. The electronic device includes an array of addressable registers storing data. An input register connected to the array stores an input command parameter (*e.g* an opcode of a command) and its associated operands in one or more input registers connected to the addressable register array via logic circuitry. The operands may include either data or address operands typically referencing at least one register of the array. Based on the input command parameter, processing circuitry processes the data stored in the addressable registers. A single instance of a command accesses the at least one register of the array. Based on the input command parameter, the command for all of the address operands: reads a datum of the data previously stored in at least one register, updates the datum thereby producing an updated datum, and writes the updated datum into at least one register. The command has multiple address operands referencing the one or more registers and supports two or more of the address operands being identical. The device preferably includes logic circuitry operatively attached between the input register and the processing circuitry, where the logic circuitry provides a logical output signal to the processing circuitry indicating which, if any, of the address operands are identical. The processing circuitry based on the logical output, processes first any identical address operands prior to writing the updated datum into the at least one register. The electronic device preferably includes a clock which provides multiple clock pulses. While the processing circuitry processes the command during at least three clock pulses, a new instance of the command begins processing by the processing circuitry on a consecutive clock pulse so that there is preferably a command throughput of one command per clock pulse. The command preferably either sets a bin of a histogram or increments a bin of a histogram by an incremental value based on the operands in the input registers. The command optionally compares the datum with the incremental values corresponding to a given bin, calculates the minimal value from amongst the datum and the incremental value(s) and writes as the updated datum the minimal value as said updated datum. The command optionally calculates the maximal value from amongst the datum or the incremental values corresponding to a given bin and writes as the updated datum the maximal value of the datum and the incremental value(s).

When the operand input registers contain address operands, they reference a portion of the addressable storage array. When the portion is contiguous, the size of the contiguous portion is preferably specified by a size value stored in an input control register connected to the array. The command preferably accesses solely the contiguous portion of the array of addressable registers. An input control register is connected to the array (via the logic circuitry) and stores a door-knock value. According to a feature of the present invention, upon initiating the command, the door-knock value is decremented and only when the door-knock value equals a previously defined minimum value (typically zero) is the updated datum written into the at least one register.

According to the present invention there is provided an electronic device implemented on a semiconductor chip. The electronic device includes a first array of addressable registers or locations. Various input registers connected to the array (via the logic circuitry), store an input command parameter, operands and a size value. This second array of input registers is connected to the first array. The input registers of the second array store a plurality of address operands referencing a plurality of locations of the first array. The accessible area of said addressable registers is specified by the size value. The address operands as stored respectively in the second array are calculated by the input command parameter and modulo the size value. Upon processing a command based on said input command parameter, processing circuitry processes data stored in the locations indicated by the address operands. A single instance of the command accesses at least one register of the accessible area such that the processing circuitry for all the address commands: reads a datum of the data previously stored in the at least one register, updates the datum thereby producing an updated datum, and writes the updated datum into the at least one register. The single instance of the command referencing the at least one register of the array supports at least two of the address operands being identical. A clock provides multiple clock pulses. The processing circuitry processes the command during three clock pulses, however a new command can be accepted on every clock cycle so that there is preferably a command throughput of one command per clock pulse.

According to an embodiment of the present invention, there is provided an electronic device implemented on a semiconductor chip. The electronic device includes an array of addressable registers. Input registers connected to the array store an input command parameter specifying a command and its operands. A single instance of the input command accesses the at least one register of the array. The command is executed by processing circuitry which processes the command for all its address operands referencing at least one of the addressable registers of the array. Based on the input command parameter, the command writes a datum into the at least one addressable register. A clock attached to the processing circuitry provides clock pulses. The command throughput in number of commands processed per clock pulse is independent of the number of the address operands. The command throughput is preferably one command per clock pulse. An input control register is preferably connected to the logic circuitry storing a door-knock value and upon receiving the command, the door-knock value is decremented so that only when the door-knock value equals a previously defined minimum value, *e.g.* 0, is the datum written into the at least one register.

### BRIEF DESCRIPTION OF THE DRAWINGS

The invention is herein described, by way of example only, with reference to the accompanying drawings, wherein:
FIG. 1 is a simplified diagram of a device, according to an embodiment of the present invention;
FIG. 2A-C illustrates a simplified timing diagrams of histogram and other commands initiated on consecutive clock pulses, according to embodiments of the present invention;
FIG. 3 and FIG 4 illustrate a simplified block diagram of a processing circuit, according to an embodiment of the present invention.

### DESCRIPTION OF THE PREFERRED EMBODIMENTS

The present invention includes one or more features of an enhanced look-up table integrated into a hardware device. The device may be implemented as part of an image processor designed to provide a command set for efficient image processing.

By way of introduction, the enhanced look-up table device, according to different embodiments of the present invention includes several innovative features. While a prior art look-up table may include registers which allow for register specific read and write accesses, an enhanced look-up table, according to embodiments of the present invention, supports commands to manipulate the data stored in the enhanced look up table in a read-modify-write sequence. An example of a read-modify-write sequence is incrementing bins of a histogram.

Furthermore, whereas a standard LUT might support "vectored" accesses (i.e. one command accesses several consecutive locations), an enhanced look-up table, according to embodiments of the present invention, supports random vectored access i.e., one command can initiate and successfully access several non-consecutive address locations.

Moreover, in an enhanced look up table, according to embodiments of the present invention which maintains a throughput of one command per single clock cycle, random access to redundant or non-unique locations is supported. A single command which accesses different address locations may include a number of redundant locations. For example, a single command performs respective increment operations, (*e.g.* increment bins of a histogram) to four address locations, *e.g*. 10, 2, 35, 2 such that address location 2 must be incremented twice by the same command. The command is preferably pre-processed to detect if the same address location appears in the command and if the incremental input values are added together so that address location, e.g. 2 of look table is incremented once and not twice thereby improving efficiency.

Another useful feature according to embodiments of the present invention is a programmable "delay" register which allows a "door-knock" value to be set indicating the number of commands attempting to access a given address before the address is actually accessed. The delay feature is analogous to knocking on a door. The door opens only after a previously defined "door-knock count" is reached. The term "door-knock" value is used herein to refer to the value of one of the delay control registers.

The principles and operation of an enhanced look-up table, according to the present invention, may be better understood with reference to the drawings and the accompanying description.

By way of introduction, it should be noted, that although the discussion herein relates to image processing, the present invention may, by non-limiting example, alternatively be configured as well using other information and/or signal processing originating as analog and/or digital signals including statistical signal processing, audio signal processing, speech signal processing and array processing from arrays of sensors.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

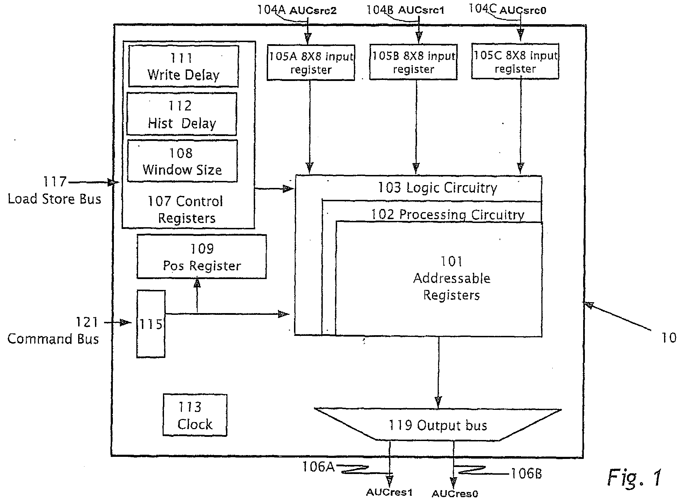

Referring now to the drawings, Figure 1 illustrates a simplified diagram of a device **10** preferably constructed in an ASIC, FPGA or discrete logic on a PCB, or other known methods in the art of electronics. At the core of device **10** is an array **101** of addressable registers or look-up table (LUT) **101** and associated processing circuitry **102** which processes commands accessing array **101.**

An exemplary LUT **101** is a 256 byte register array accessible in odd and even banks. This configuration allows for four odd/even pairs of bytes to be written simultaneously and for eight separate locations to be read simultaneously.

Command input parameters and/or operands are optionally pre-processed by logic circuitry **103.** Device **10** further includes three data bus inputs **104A, 104B** and **104C** of 64 bits, each including for instance 8 input registers of 8 bits each **105A, 105B, 105C** (respectively), and similarly two output busses **106A,B** of 64 bits (8 registers of 8 bits) from output multiplexer **119.**

A memory mapped load/store bus **117** loads configuration or control registers 107. Configuration Registers **107** which contain preferably 16 bit registers are used to control various command operations. Configuration registers **107** as memory mapped locations on load/store bus **117** are preferably accessed via standard memory commands. Configuration registers **107** can preferably be accessed individually or as a 64 bit word. Configuration registers include window size register **108** and delay control registers: write delay register **111** and histogram delay register **112** used for controlling respective "door-knock" delays prior to executing commands.

A command bus **121** (*e.g.* of 9 bits) indicates the specific command which is latched in a command register **115.** Some commands optionally use a register array **109** previously loaded with address locations referencing addresses of array **101.** A clock **113** provides clock pulses to parts of device 10 duration operation.

Input registers **105,** data feeding output multiplexer **119,** position register **109,** control registers **107** and command register **115** are preferably latched so that until new values are latched in the respective registers the previously stored values are maintained.

### Operation of Device 10

Look-up table **101** is preferably implemented by a multi-port register file able to perform multiple, *e.g*. 8, reads and writes per cycle of clock **113.** Data input to LUT **101** is typically achieved by latching data busses **104** and command bus **121.** The outputs from LUT **101** are driven upon any command that changes a specific output bus (i.e., **106A** AUCRes0 and/or **106B** AUCRes1). Device **10** preferably has a command throughput of 1 clock cycle, such that upon every new clock cycle the incoming command input **115** on the command bus **121** is executed. The device processes commands in a 3 cycle pipeline, such that every command processed has its result available on the output bus **106** after 3 cycles. If there are no commands to execute, the software drives, for instance, NOP commands.

Device **10** preferably handles different command types including: LUT read/write, Histogram, Sliding Window and Miscellaneous. The following table summarizes various command operations, according to different embodiments of the present invention.
Notation: u=unsigned, s=signed, b=byte (8 bits), h= halfword (16 bits), rw= read/write

**Table 1: Commands**

| Command Type | Command name |
|---|---|
| LUT read/write | |
| | lutread_8ub_8b |
| | lutread_4ub_4h_0 |
| | lutread_4ub_4h_1 |
| | lutwrite_1ub_8b |
| | lutrw_8ub_1ub_8b_8b |
| Histogram | |
| | histb_4ub_4ub |
| | histh_4ub_4ub_0 |
| | histh_4ub_4ub_1 |
| | histbmin_4ub_4ub |
| | histbmax_4ub_4ub |
| | histbset_4ub_4ub |
| Sliding Window | |
| | lutreadinc_8sb_8b |
| | lutreadposld_8ub_8b |
| | latrwinc_8sb_1ub_8b_8b |
| | lutrwposld_8ub_1ub_8b_8b |
| | lutposld_8ub |
| Misc | |
| | reset |
| | nop |

### Enhanced LUT Commands: Read, Write, ReadWrite

LUT **101** read, write and read/write commands provide for various vectored accesses to device **10.** The read and/or write commands are optionally configured for random addressing to non-consecutive addresses.

Upon command lutread_8ub_8b, eight separate bytes are read typically from eight unique locations indicated by eight separate unsigned bytes which are used as indices to the LUT.

Command lutread_8ub_8b pseudo-code is:
AUCres0[07:00] = LUT(AUCsrc0[07:00])
AUCres0[15:08] = LUT(AUCsrc0[15:08])
AUCres0[23:16] LUT(AUCsrc0[23:16])
AUCres0[31:24] = LUT(AUCsrc0[31:24])
AUCres0[39:32] = LUT(AUCsrc0[39:32])
AUCres0[47:40] = LUT(AUCsrc0[47:40])
AUCres0[55:48] = LUT(AUCsrc0[55:48])
AUCres0[63:56] = LUT(AUCsrc0[63:56])

Upon command lutread_4ub_4h four separate half words, are read from typically four unique locations indicated by four separate unsigned bytes which are used as indices to LUT **101 .** An opcode extension bit optionally indicates whether the 7 bit index to the 128 half words comes from the 7 least significant bits lsbs (ext=0), or the 7 most significant bits (ext=1)

Pseudo code for command lutread_4ub_4h is:
for ext=0:
   AUCresO[15:00]= {LUT(AUCsrc0[06:00],b1),LUT(AUCsrc0[06:00],b0)}
   AUCres0[31:16]= {UT(AUCsrc0[14:08],b1),LUT(AUCsrc0[14:08],b0)}
   AUCres0[47:32]= {LUT(AUCsrc0[22:16],b1),LUT(AUCsrc0[22:16],b0)}
   AUCres0[63:48]= {LUT(AUCsrc0[30:24],b1),LUT(AUCsrc0[30:24],b0)}
for ext=1:
   AUCres0[15:00]= {LUT(AUCsrc0[07:01],b1),LUT(AUCsrc0[07:01],b0)}
   AUCres0[31:16]= {LUT(AUCsrc0[15:09],b1),LUT(AUCsrc0[15:09],b0)} AUCres0[47:32]= {LUT(AUCsrc0[23:17],b1),LUT(AUCsrc0[23:17],b0)}
   AUCres0[63:48]= {LUT(AUCsrc0[31:25],b1),LUT(AUCsrc0[31:25],b0)}

Upon command lutwrite_1ub_8b eight separate bytes, are written to eight consecutive bytes located by one unsigned byte which is used as an index to LUT **101.** The index is eight byte aligned, and thus processing circuitry **102** zeros the 3 least significant bits.

Pseudo code for command lutwrite_1ub_8b is:
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Command lutrw_8ub_1ub_8b_8b is a combination of the lutwrite and lutread commands. Eight separate bytes are read from eight unique locations indicated by eight separate unsigned bytes which are used as indices to LUT **101.**

Pseudo code for command lutrw_8ub_1ub_8b_8b is:
AUCres0[07:00] = LUT(AUCsrc0[07:00])
AUCres0[15:08] = LUT(AUCsrc0[15:08])
AUCres0[23:16] = LUT(AUCsrc0[23:16])
AUCres0[31:24] = LUT(AUCsrc0[31:24])
AUCres0[39:32] = LUT(AUCsrc0[39:32])
AUCres0[47:40] = LUT(AUCsrc0[47:40])
AUCres0[55:48] = LUT(AUCsrc0[55:48])
AUCres0[63:56] = LUT(AUCsrc0[63:56])

LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Eight separate bytes are written to eight typically consecutive bytes located by one unsigned byte which is used as an index to LUT **101.** The index is eight byte-aligned, and thus processing circuitry **102** zeros the three least significant bits.

Commands lutwrite_1ub_8b and lutrw_8ub_1ub_8b_8b are optionally performed in conjunction with "write delay" control register **111** which contains a door-knock value to be decremented upon receiving a write type command. The actual write indicated in the command is executed when the delay register door-knock value is a previously determined minimal value, typically zero. A decrement on the register is not performed following a successful write of the data.

### Histogram Commands

Histogram commands provide for various histogram manipulations. Each histogram command provides for multiple, e.g four, bins to be updated simultaneously. According to an embodiment of the present invention, the four bin locations are not necessarily unique, and as such, a histogram command may actually request updating one and the same bin with four different values. To support this eventuality, the logic circuitry 103 compares bin address operands and performs the requested operation accounting for all corresponding address operands even with redundant bins.

Furthermore, histogram commands are performed in conjunction with Control Register **112** "hist delay" which contains a door-knock value to be decremented upon receiving a histogram command. The actual histogram update requested by the command is executed when the value stored in hist delay register **112** is zero. No decrement on register **112** is performed following a successful histogram update. Typically, histogram commands include read and then write cause a decrement of the door-knock value only following the write phase of the command.

Histogram commands typically require three clock cycles to execute. During the first clock cycle current bin value is read (histrd) and during the second clock cycle to the updated bin value is calculated (histdatcalc) and during the third cycle the updated bin value is written back (histwr) into the same address. According to an embodiment of the present invention during operation of device **10,** a throughput of one cycle is preferably maintained, i.e. a new command is accepted every cycle. In the event that the software performs an illegal sequence of commands, the illegal commands are ignored

(converted internally to reset commands) and the original histogram commands will complete normally.

Exemplary histogram commands are described as follows, according to different embodiments of the present invention:
In command htstb_4ub_4ub four separate unsigned bytes, specify four indices to LUT 101 organized as 256 bytes which are to be incremented by four corresponding values indicated by four separate unsigned bytes. In the case that the new value to be written is greater than xFF, the new value is saturated to xFF.

Pseudo-code for command histb_4ub_4ub is: :
LUT(AUCsrc0[07:00])= LUT(AUCsrc0[07:00]) + AUCsrc2[07:00]
LUT(AUCsrc0[15:08])= LUT(AUCsrc0[15:08]) + AUCsrc2[15:08]
LUT(AUCsrc0[23:16])= LUT(AUCsrc0[23:16]) + AUCsrc2[23:16]
LUT(AUCsrc0[31:24])= LUT(AUCsrc0[31:24) + AUCsrc2[31:24]

In command histh_4ub_4ub four separate unsigned bytes, specify four indices to LUT **101** organized as 128 half words which are to be incremented by four corresponding values indicated by four separate unsigned bytes. In the case that the new value to be written is greater than xFFFF, the new value is saturated to xFFFF.

The opcode extension bit preferably indicates whether the 7 bit index comes from the 7 least significant bits (ext=0), or the 7 most significant bits. (ext=1).

Pseudo code for command histh_4ub_4ub is:
LUTbin0 = LUTbin0 + AUCsrc2[07:00]
LUTbin1 = LUTbin1 + AUCsrc2[15:08]
LUTbin2 = LUTbin2 + AUCsrc2[23:16]
LUTbin3 = LUTbin3 + AUCsrc2[31:24]

In the case that more than one index points to the same bin, the bin will be incremented with the sum of all the increment values.

Where, for ext=0
LUTbin0 = {LUT(AUCsrc0[06:00],b1),LUT(AUCsrc0[06:00],b0)}
LUTbin1 = {LUT(AUCsrc0[14:08],b1),LUT(AUCsrc0[14:08],b0)}
LUTbin2 = {LUT(AUCsrc0[22:16],b1),LUT(AUCsrc0[22:16],b0)}
LUTbin3 = {LUT(AUCsrc0[30:24],b1),LUT(AUCsrc0[30:24],b0)}

Where, for ext=1
LUTbin0 = {LUT(AUCsrc0[07:01],b1),LUT(AUCsrc0[07:01],b0)}
LUTbin1 = {LUT(AUCsrc0[15:09],b1),LUT(AUCsrc0[15:09),b0)}
LUTbin2 = {LUT(AUCsrc0[23:17),b1),LUT(AUCsrc0[23:17],b0)}
LUTbin3 = {LUT(AUCsrc0[31:25],b1),LUT(AUCsrc0[31:25],b0)}

In command histbmin_4ub_4ub four separate unsigned bytes, specify four indices to LUT **101** organized as 256 bytes to be updated by four corresponding "update" values indicated by four separate unsigned bytes, such that LUT **101** entry receives the minimum value between its current value and the update operand value.

Pseudo-code for command hi stbmin_4ub_4ub is:
LUT(AUCsrc0[07:00])= min[LUT(AUCsrc0[07:00]),AUCsrc2[07:00]]
LUT(AUCsrc0[15:08])= min[LUT(AUCsrc0[15:08]),AUCsrc2[15:08]]
LUT(AUCsrc0[23:16])= min[LUT(AUCsrc0[23:16]),AUCsrc2[23:16]]
LUT(AUCsrc0[31:24])= min[LUT(AUCsrc0[31:24]),AUCsrc2[31:24]]

In the case that more than one index points to the same bin, the bin is preferably updated with the minimum of all the update values.

In command histbmax_4ub_4ub four separate unsigned bytes, specify four indices to LUT **101** organized as 256 bytes to be updated by four corresponding "update" values indicated by four separate unsigned bytes, such that LUT **101** entry receives the maximum value between its current value and the update operand,

Pseudo code for command hi stbmax_4ub_4ub is:
LUT(AUCsrc0[07:00])= max[LUT(AUCsrc0[07:00]),AUCsrc2[07:00]]
LUT(AUCsrc0[15:08])= max[LUT(AUCsrc0[15:08]),AUCsrc2[15:08]]
LUT(AUCsrc0[23:16])= max[LUT(AUCsrc0[23:16]),AUCsrc2[23:16]]
LUT(AUCsrc0[31:24])= max[LUT(AUCsrc0[31:24]),AUCsrc2[31:24]]

In the case that more than one index points to the same bin, the bin is preferably updated with the maximum of all the update values.

In command histbset_4ub_4ub four separate unsigned bytes, specify four indices to LUT **101** organized as 256 bytes to be set by four corresponding "update" values indicated by four separate unsigned bytes.

Pseudo-code for command hi stbset_4ub_4ub is:
LUT(AUCsrc0[07:00]) = AUCsrc2[07:00]
LUT(AUCsrc0[15:08]) = AUCsrc2[15:08]
LUT(AUCsrc0[23:16]) = AUCsrc2[23:16]
LUT(AUCsrc0[31:24]) = AUCsrc2[31:24]

In the case that more than one index points to the same bin, the bin is preferably set with the maximum update value given.

### Sliding Window Commands

Sliding window commands provide for various manipulations of LUT **101.** Each sliding window command provides for multiple, *e.g.* eight, locations to be updated simultaneously. Sliding window commands are performed in conjunction with "window size" control register **108** and internal register array "position register" **109.** Window size register **108** stores a maximum value of any LUT **101** index stored in position register **109.** When the window size register **108** is updated, the value stored therein correspondingly limits the LUT **101** index. A position update command (lutposld) takes the index values stored in one or more 8x8 input registers **105** and performs the modulo operation on each by the window size value stored in window size control register **108,** storing the results in position register **109.** The modulo operation (%) is equivalent to zeroing the most significant bits greater than the bits required to represent the window size. For example, for a window size of 32, bits 4:0 are maintained and bits 7:5 are zeroed.

Exemplary sliding window commands, according to different embodiments of the present invention are described as follows:
Upon command lutreadinc_8sb_8b eight separate bytes are read from LUT 101 as specified in position register **109.** The indices of position register **109** are then incremented by the eight separate signed bytes modulo the value stored in window size register **108.** Pseudo-code for command lutreadinc_8sb_8b is:
   AUCres0[07:00] = LUT(POS[07:00])
   AUCres0[15:08] = LUT(POS[15:08])
   AUCres0[23:16] = LUT(POS[23:16])
   AUCres0[31:24] = LUT(POS[31:24])
   AUCres0[39:32] = LUT(POS[39:32])
   AUCres0[47:40] = LUT(POS[47:40])
   AUCres0[55:48] = LUT(POS[55:48])
   AUCres0[63:56] = LUT(POS[63:56])
   POS[07:00] = (POS[07:00] + AUCsrc0[07:00]) % Crwinsize
   POS[15:08] = (POS[15:08] + AUCsrc0[15:08]) % Crwinsize
   POS[23:16] = (POS[23:16] + AUCsrc0[23:16]) % Crwinsize
   POS[31:24] = (POS[31:24] + AUCsrc0[31:24]) % Crwinsize
   POS[39:32] = (POS[39:32] + AUCsrc0[39:32]) % Crwinsize
   POS[47:40] = (POS[47:40] + AUCsrc0[47:40]) % Crwinsize
   POS[55:48] = (POS[55:48] + AUCsrc0[55:48] % Crwinsize
   POS[63:56] = (POS[63:56] + AUCsrc0[63:56]) % Crwinsize

Upon command lutreadposld_8ub_8b eight separate bytes are read from LUT **101** as specified in position register **109** which contains eight unique indices.

The eight indices of position register **109** are then set by the eight separate unsigned bytes modulo the value stored in window size register **108.**

Pseudo-code for command lutreadposld_8ub_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrcO[47:40]) % Crwinsize
POS[55:48] = (AUCsrc0[55:48]) % Crwinsize
POS[63:56] = (AUCsrc0[63:56]) % Crwinsize

Upon command lutrwinc_8ub_1ub_8b_8b eight separate bytes are read from LUT **101** as specified in position register **109** which contains eight unique indices. The eight indices of position register **109** are then incremented by the eight separate signed bytes modulo the value stored in window register **108.** Eight separate bytes are written to LUT **101** as specified in one unsigned byte which is an initial index to be incremented to store the 8 bytes sequentially in LUT **101.** The initial index must be 8 byte-aligned, and thus the hardware zeros the 3 least significant bits. The write operation is optionally performed in conjunction with write delay control register **111** which contains a value to be decremented upon receiving a write type command. The actual write indicated in the command will only be executed when the delay register value is zero (no decrement on register 111 will be performed following a successful write of the data). Pseudo-code for command lutrwinc_8ub_1ub_8b_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (POS[07:00] + AUCsrc0[07:00]) % Crwinsize
POS[15:08] = (POS[15:08] + AUCsrc0[15:08]) % Crwinsize
POS[23:16] = (POS[23:16] + AUCsrc0[23:16]) % Crwinsize
POS[31:24] = (POS[31:24] + AUCsrc0[31:24]) % Crwinsize
POS[39:32] = (POS[39:32] + AUCsrc0[39:32]) % Crwinsize
POS[47:40] = (POS[47:40] + AUCsrc0[47:40]) % Crwinsize
POS[55:48] = (POS[55:48] + AUCsrc0[55:48]) % Crwinsize
POS[63:56] = (POS[63:56] + AUCsrc0[63:56]) % Crwinsize
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Upon command lutrwposld_8sb_1ub_8b_8b eight separate bytes, are read from LUT **101** as specified in position register **109** which contains eight unique indices. The eight indices of position register **109** are then set by the eight separate unsigned bytes modulo the value stored in window register **108.** Eight separate bytes are written to the LUT as specified in the one unsigned byte which is an initial index to be incremented to store the 8 bytes sequentially in LUT **101.** The index is eight byte aligned, and thus processing circuitry **102** zeros the three least significant bits. The write operation is performed in conjunction with write delay control register **111** which contains a value to be decremented upon receiving any write type command. The actual write indicated in the command will only be executed when the delay register value is zero (no decrement on write delay control register **111** is performed following a successful write of the data.

Pseudo code for command lutrwposld_8sb_1ub_8b_8b is:
AUcres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % crwinsize
POS[31:24] = (AUCsrc0[31:24]) % Crwinsize
POS[39:32] = (AUCsrc0[39:32]) % Crwinsize
POS[47:40] = (AUCsrcO[47:40]) % Crwinsize
POS[55:48] = (AUCsrc0[55:48]) % Crwinsize
POS[63:56] = (AUCsrc0[63:56]) % Crwinsize
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Upon command lutposld eight bytes of index data are loaded into 64 bit position register **109** (1 byte per position) whereby the values are the result of the input data bytes modulo the value stored in widow size control register **108.** Processing circuitry **102** updates position register **109** as specified by the specific command. Pseudo code for command lutposld is:
POS[07:00] = (AUcsrc0[07:00]) % crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrc0[47:40]) % Crwinsize
POS[55:48] = (AUCsrc0[55:48]) % Crwinsize
POS[63:56] = (AUCsrc0[63:56]) % Crwinsize

### Miscellaneous Commands

The Reset command zeros output register **119** so that output appears zero until the next command which changes outputs is executed.

The Nop command is used as required in order to maintain values of the output register **119** valid until the next command which changes values of output register **119.**

### Histogram - Data Forwarder

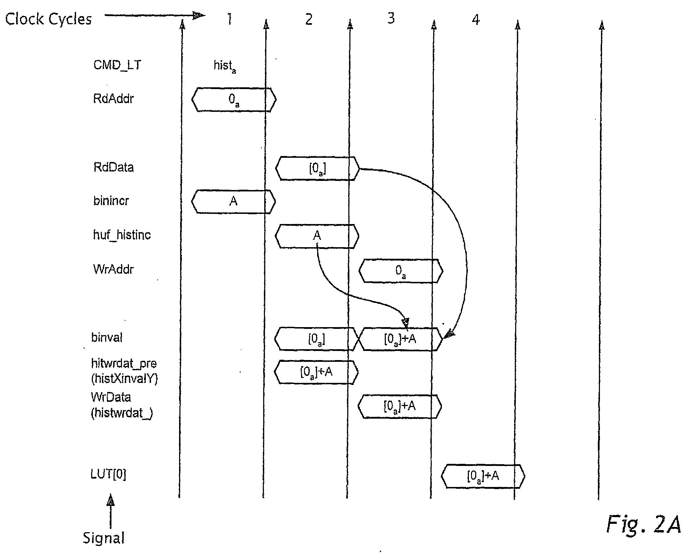

Reference is now made to Figure 2A which illustrates a simplified timing diagram of a histogram command for LUT **101,** according to an embodiment of the present invention. Histogram circuitry typically requires a minimum of three clock cycles to complete one histogram increment command, *e.g.* histb_4ub_4ub. A histogram command, *e.g*. histb_4ub_4ub, is used to access address location 0 in order to increment the value stored in address location 0 by a value A. At clock cycle 1, address 0 and increment value A are input. At clock cycle 2, the value [0] stored in address 0 is available on rdData bus and added to the increment value (huf_histinc). At clock cycle 3, the new bin value (binval) calculated by adding the respective values in huf_histinc and rdData is now ready on WrDat bus to be written to LUT **101.**

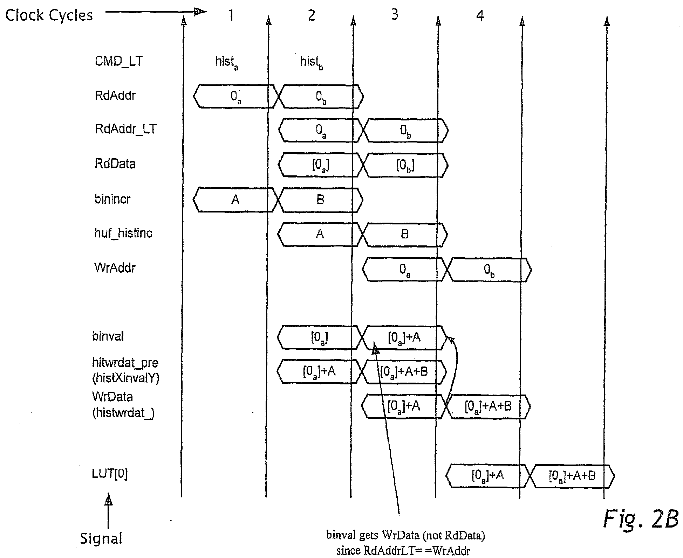

The data forwarding mechanism recognizes that a new command requires data from the previous command not yet available in the memory element or register, and consequently performs a "read" operation not from the memory cell which is not yet ready for reading but from another bus within the internal data pipe which has the valid datum. Reference is now made to Figure 2B which includes a simplified block diagram of two consecutive histogram commands *histₐ* as in the timing diagram of Figure 2A and in addition a second histogram command *hist_{b}* which is input into ELUT **10** on the next clock cycle, clock cycle 2. It is readily seen that the contents of location 0 now on the RdData bus in cycle 3 is not valid for use as it does not include the increment value A from command *histₐ.* Instead, according to an embodiment of the present invention, processing circuitry 102 realizes this condition and "forwards" the data calculated in the first hist command (wherein WrDat has [0ₙ]+A) and that is used as the "contents read" (i.e., binval) by the second hist command *hist_{b}.*

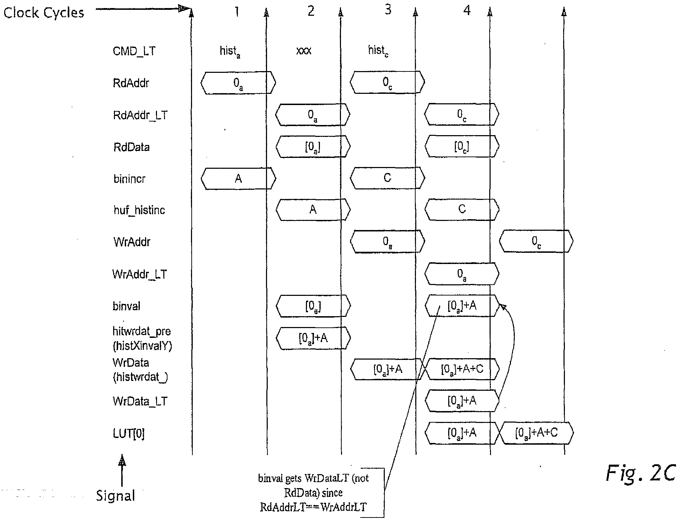

Reference is now made to Figure 2C, which illustrates a first histogram command *histₐ* as in Figure 2A, followed by another command *xxx* during the second clock cycle followed by a third histogram command on the third clock cycle, *hist_{c}*

As shown, the second histogram command (*hist_{c}*) must not use the contents of location 0 (marked 0_{c}) now on the RdData bus since this does not account for the previous hist command (*histₐ*) which is still in progress. Instead, processing circuitry **102** recognizes this condition and "forwards" the data calculated in the first hist command (WrDat_LT has [0ₙ]+A) and that is used as the "contents read" (i.e., binval) by the second hist command (*hist_{c}*)*.* It should be noted that the timing the command sequence *histₐ*-*xxx*-*hist_{c}* as illustrated in Figure 2C is a different case then two consecutive hist commands *histₐ-hist_{b}* because in the timing of Figure 2C the data from the first hist command is one state further in the internal data pipeline (i.e., the *histₐ-hist_{b}* scenario used WrDat for data forwarding whereas the *histₐ-xxx-hist_{c}* scenario used WrDat_LT).

### Histogram Update Logic

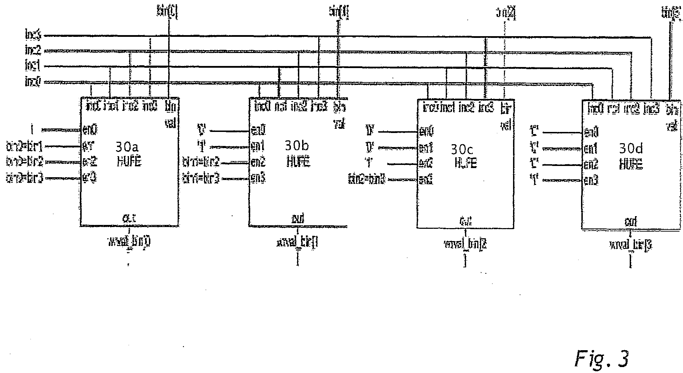

Reference is now made to Figure 3, illustrating a simplified block diagram of a circuit of device **10,** according to an embodiment of the present invention. In order to support the multiple histogram commands as described above, *e.g.* bin increment, minimum, maximum, and set, and further account for the possibility that a single instance of a histogram command may contain multiple references to a single bin, multiple generalized logic units **30a, 30b, 30c,** and **30d** or Histogram Update Function Elements (HUFE **30a-30d)** such that each handles a single bin referenced by the single instance of a histogram command , *e.g.* four elements **30** for four bins as shown in Figure 3.

Each HUFE 30 has four inputs ***inc0, inc1, inc2*** and ***inc3*** which correspond to the four incremental values input in the histogram command for incrementing the four bin values, respectively. Each HUFE **30** has as an input a bin value input corresponding to the bin it is processing. HUFE **30** also four logical inputs ***en0, en1, en2*** and ***en3*** which indicate the address operands which are the same, if any are the same. Logical inputs ***en0, en1, en2*** and ***en3*** are preferably generated and output by logic circuitry 103. For HUFE **30a, *en0*** is always enabled with a value '1', ***en1*** is enabled only when the bin0 and bin1 are the same address locations; ***en2*** is enabled only when bin0 and bin2 are the same address locations; ***en3*** is enabled only when bin0 and bin3 are the same address locations. For HUFE **30b, *en0*** is always disabled with a value '0', ***en1*** is always enabled; ***en2*** is enabled only when bin1 and bin2 are the same address locations; en3 is enabled only when bin1 and bin3 are the same address locations. For HUFE **30c, *en0*** and ***en1*** are always disabled with a value '0', ***en2*** is always enabled; ***en3*** is enabled only when bin2 and bin3 are the same address locations and for HUFE **30d, *en0, en1,*** and ***en*2** are always disabled with a value '0', and ***en3*** is always enabled. Each HUFE **30** includes a respective output **wrval_bin[0], wrval_bin[1], wrval_bin[2], wrval_bin[3]** of an updated bin value. In the case where an out value is unneeded since the bin address was handled by a previous HUFE (e.g., bin0=bin3) so the bin output is unnecessary and the value is simply ignored by processing circuitry **102** responsible for writing the bin value to LUT **101.**

Following the execution of the command the final value is "saturated" if necessary. That is, if the total sum of the inputs exceeded the 8b or 16b output width, then the output value is maxed to either xFF or xFFFF, respectively.

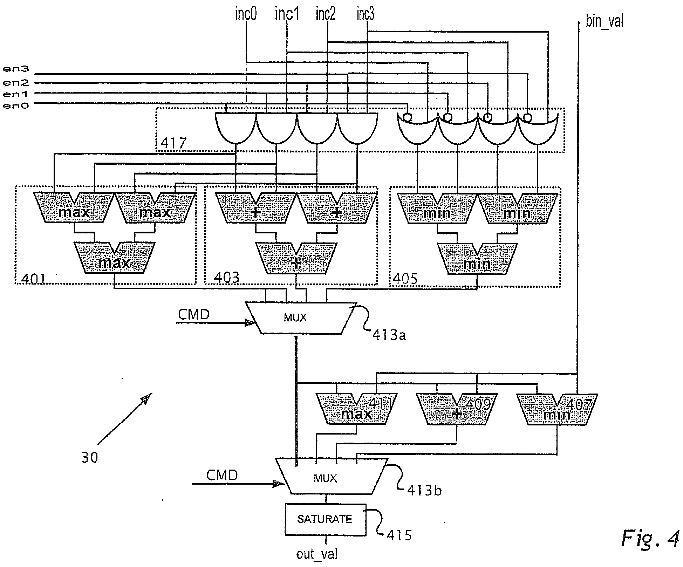

Reference is now made to Figure 4, which is an exemplary block diagram of HUFE **30.** HUFE **30** functions to perform histogram commands for any of four histogram commands, initializing a bin value, incrementing a bin value by an input value, finding a minimum between the current bin value and an input value or finding a maximum between the current bin value and an input value.

When none of the inputs bin addresses are the same, then each HUFE **30** instance operates independently on the input inc value. Thus for example HUFE **30d,** will have only ***en3*** enabled and the input value ***inc*3** will then be handled as the lone input operand according to the input command. Thus, if the command is "max" the ***inc3*** input will be fed uninhibited through logic **417, 401, 403, 405, 413a** and arriving at block **411** which calculates the maximum between its inputs ***inc3*** and ***bin_val.*** If the command was "inc" then block **409** adds inputs ***inc3*** and ***bin_val,*** and if the command was "min" then block **407** calculates the minimum between its inputs ***inc3*** and ***bin_val.*** For the "set" command ***inc3*** just passes through to multiplexer **413b.** Depending on the command (*e.g.* set, increment, maximum or minimum) being used a control signal to multiplexer **413b** selects the appropriate output to ***out-val.***

Otherwise, when two or more address operands are the same, logic circuitry **103** generates enable signals ***en0, en1, en2*** and ***en3*** accordingly. Block **417** includes logic gates which route the input signals respectively to block **401** for performing a preliminary maximum calculation between any of inputs ***inc0, inc1, inc2 and inc3*** for which the respective address operands are the same, similarly to block **405** for performing a preliminary minimum calculation, between any of inputs ***inc0, inc1, inc2 and inc3*** for which the respective address operands are the same and to block **403** for addition of any of inputs ***inc0*, *inc1, inc2 and inc3*** for which the respective address operands are the same. In the event that the total sum of the inputs exceeded the 8 bit or 16 bit output width, block **415** functions to saturate the output value to its maximum (xFF or xFFFF, respectively).

While the invention has been described with respect to a limited number of embodiments, it will be appreciated that many variations, modifications and other applications of the invention may be made.

## Claims

1. An electronic look-up device (10) implemented on a semiconductor chip, the electronic look-up device, comprising:
(a) an array of addressable registers (101) storing a plurality of data;
(b) a plurality of input registers (105,115) operatively connected to said array of addressable registers (101), wherein said input registers (105,115) are configured to store an input command parameter specifying a command and a plurality of operands of said command, **characterized by** said operands including a plurality of address operands referencing a plurality of non-consecutive registers of said array of addressable registers (101);
(c) processing circuitry (102) configured to process, based on said input command parameter specifying a command, said data; wherein a single instance of said command accesses said non-consecutive registers of said array of addressable registers (101), and based on said input command parameter said processing circuitry (102) for all of said address operands: reads a datum of said data previously stored in said addressable registers (101), updates said datum thereby producing an updated datum, and writes said updated datum into one of said addressable registers (101); and
(d) logic circuitry (103) operatively attached between said input registers (105,115) and said processing circuitry (102), said logic circuitry (103) configured to provide a logical output signal to said processing circuitry (102) indicating which if any of said address operands are identical, thereby supporting at least two of said address operands being identical.

2. The electronic look-up device (10), according to claim 1, wherein said processing circuitry based on said logical output signal, processes any said identical address operands prior to writing said updated datum into one of said non-consecutive registers.

3. The electronic look-up device (10), according to claim 1, further comprising:
(e) a clock (113) which provides a plurality of clock pulses, wherein said processing circuitry processes said command during at least three clock pulses, wherein a new instance of said command begins processing by said processing circuitry on a consecutive clock pulse so that there is a command throughput of at least one command per clock pulse.

4. The electronic look-up device (10), according to claim 1, wherein said command sets a bin of a histogram by an incremental value.

5. The electronic look-up device (10), according to claim 1, wherein said command increments a bin of a histogram by an incremental value.

6. The electronic look-up device (10), according to claim 1, wherein said command compares said datum with at least one incremental value, said command calculates the minimal value selected from the group of said datum and said at least one incremental value and said command writes said minimal value as said updated datum.

7. The electronic look-up device (10), according to claim 1, wherein said command compares said datum with at least one incremental value, said command calculates the maximal value selected from the group of said datum and said at least one incremental value and writes said maximal value as updated datum.

8. The electronic look-up device (10), according to claim 1, further comprising:
(e) a second array of registers (109) operatively connected to said array;
wherein said registers of said second array store a plurality of locations referencing a portion of said array.

9. The electronic look-up device (10), according to claim 8, wherein said portion is contiguous further comprising
(f) an input control register (109) operatively connected to said logic circuitry; wherein the size of said contiguous portion is specified by a size value stored in said input control register.

10. The electronic look-up device (10), according to claim 9, wherein said command accesses a location solely within said contiguous portion of said array of addressable registers.

11. The electronic look-up device (10), according to claim 8, further comprising
(f) an input control register (109) operatively connected to said logic circuitry, wherein a door-knock value is stored in said input control register, wherein upon initiating said command, said door-knock value is decremented and only upon said door-knock value equaling a previously defined minimum value is said updated datum written into one of said addressable registers.

12. The electronic look-up device (10), according to claim 1, further comprising:
(e) a second array (109) of registers operatively connected to said first array; wherein said operands reference said second array of registers; wherein said registers of said second array store a plurality of address operands referencing a plurality of locations of said first array and **characterized by** the accessible area of said addressable registers (101) is specified by said size value.

13. The electronic look-up device (10), according to claim 12, wherein said address operands as stored respectively in said second array are calculated based on said input command parameter modulo said size value.

14. The electronic look-up device (10), according to claim 12, further comprising:
(f) processing circuitry (102) which upon processing a single instance of a command based on said input command parameter processes a plurality of data stored in said locations.

15. The electronic look-up device (10), according to claim 14, wherein a single instance of said command accesses a plurality of said addressable registers of said accessible area, and based on said input command parameter, said command for said at least one addressable register and for all said address operands: reads a datum of said data previously stored in said at least one register, updates said datum thereby producing an updated datum, and writes said updated datum into said at least one register.

16. The electronic look-up device (10), according to claim 15, wherein the single instance of the command referencing the at least one register of the array supports at least two of said address operands being identical.

17. The electronic look-up device (10), according to claim 15, further comprising:
(g) a clock (113) which provides a plurality of clock pulses, wherein said processing circuitry processes said command during at least three clock pulses, wherein a new instance of said command begins processing by said processing circuitry on consecutive clock pulses so that there is a command throughput of one command per clock pulse.

18. The electronic look-up device, according to claim 1, further comprising:
(e) a clock (113) operatively attached to said processing circuitry provides a plurality of clock pulses, wherein the command throughput in number of commands processed per clock pulse is independent of the number of said address operands.

19. The electronic look-up device (10), according to claim 18, wherein said command throughput is one command per clock pulse.

20. The electronic look-up device (10), according to claim 18, further comprising the step of
(f) an input control register (105) operatively connected to said processing circuitry, wherein a door-knock value is stored in said input control register, and upon receiving said command, said door-knock value is decremented and only upon said door-knock value equaling a previously defined minimum value is said datum written into one of said addressable registers (101).

## Patentansprüche

1. Elektronische Nachschlage- oder Verweiseinrichtung (look-up device) (10), implementiert auf einem Halbleiterchip, wobei die Nachschlage- oder Verweiseinrichtung aufweist:
(a) ein Array an adressierbaren Registern (101), die eine Vielzahl von Daten speichern;
(b) eine Vielzahl an Eingaberegistern (105, 115), die mit dem Array an adressierbaren Registern (101) in Wirkverbindung stehen, wobei die Eingaberegister (105,115) konfiguriert sind, um einen Eingabebefehlparameter, der einen Befehl spezifiziert, und eine Vielzahl von Operanten des Befehls zu speichern, **dadurch gekennzeichnet, dass** die Operanten eine Vielzahl von Adressoperanten umfassen, die eine Vielzahl von nicht aufeinanderfolgenden Registern des Array s an adressierbaren Registern (101) referenzieren;
(c) Verarbeitungsschaltung (102), die konfiguriert ist, um die Daten basierend auf dem Eingabebefehlparameter, der einen Befehl spezifiziert, zu verarbeiten; wobei ein einzelne Aufruf des Befehls auf die nicht aufeinanderfolgenden Register des Arrays an adressierbaren Registern (101) zugreift und basierend auf dem Eingabebefehlparameter die Verarbeitungsschaltung (102) für alle der Adressoperanten: ein Datum oder einen Datensatz der zuvor in den adressierbaren Registern (101) gespeicherten Daten liest, das Datum oder den Datensatz updatet, wodurch ein upgedatetes Datum oder ein upgedateter Datensatz erzeugt wird und das upgedatete Datum oder der upgedatete Datensatz in eines der adressierbaren Register (101) schreibt; und
(d) eine logische Schaltung (103) operativ zwischen den Eingaberegistern (105,115) und der Verarbeitungsschaltung (102) angebracht ist, wobei die logische Schaltung (103) konfiguriert ist, um ein logisches Ausgabesignal an die Verarbeitungsschaltung (102) bereit zu stellen zum Anzeigen, welche, falls vorhanden, der Adressoperanten identisch sind, wodurch unterstützt wird, dass wenigstens zwei der Adressoperanten identisch sind.

2. Elektronische Nachschlage- oder Verweiseinrichtung (10) nach Anspruch 1, wobei die Verarbeitungsschaltung basierend auf dem logischen Ausgabesignal einen der identischen Adressoperanten verarbeitet, bevor ein upgedatetes Datum oder ein upgedateter Datensatz in eine der nicht aufeinanderfolgenden Register geschrieben wird.

3. Elektronische Nachschlage- oder Verweiseinrichtung (10) nach Anspruch 1, die ferner aufweist:
(e) einen Takt (113), der eine Vielzahl von Taktsignalen bereitstellt, wobei die Verarbeitungsschaltung den Befehl während wenigstens drei Taktpulsen verarbeitet, wobei ein neuer Aufruf des Befehls ein Verarbeiten durch die Verarbeitungsschaltung bei einem nachfolgenden Taktsignal beginnt, sodass es einen Befehlsdurchgang wenigstens eines Befehls je Taktpuls gibt.

4. Elektronische Nachschlage- oder Verweiseinrichtung (10) nach Anspruch 1, wobei der Befehl einen Platz oder Bin eines Histogramms auf einen inkrementellen Wert setzt.

5. Elektronische Nachschlage- oder Verweiseinrichtung (10) nach Anspruch 1, wobei der Befehl einen Platz oder Bin eine Histogramms um einen inkrementellen Wert inkrementiert.

6. Elektronische Nachschlage- und Verweiseinrichtung (10) nach Anspruch 1, wobei der Befehl das Datum oder den Datensatz mit wenigstens einem inkrementellen Wert vergleicht, der Befehl den Minimalwert berechnet, der aus der Gruppe des Datums oder des Datensatzes und dem wenigstens einem inkrementellen Wert ausgewählt ist, und der Befehl den Minimalwert als das upgedatete Datum oder den upgedateten Datensatz schreibt.

7. Elektronische Nachschlage- oder Verweiseinrichtung (10) nach Anspruch 1, wobei der Befehl das Datum oder den Datensatz mit wenigstens einem inkrementellen Wert vergleicht, der Befehl den maximalen Wert berechnet, der aus der Gruppe des Datums oder des Datensatzes und dem wenigstens einen inkrementellen Wert ausgewählt ist, und den Maximalwert als das upgedatete Datums oder als den upgedateten Datensatz schreibt.

8. Elektronische Nachschlage- oder Verweiseinrichtung (10) nach Anspruch 1, wobei sie ferner aufweist:
(e) ein zweites Array an Registern (109), das mit dem Array wirkverbunden ist; wobei die Register des zweiten Arrays eine Vielzahl an Orten speichern, die einen Teil oder Abschnitt des Arrays referenzieren.

9. Elektronische Nachschlage- oder Verweiseinrichtung (10) nach Anspruch 8, wobei der Teil oder Abschnitt zusammenhängend ist und ferner aufweist (f) ein Eingabekontrollregister (109), das mit der logischen Schaltung wirkverbunden ist; wobei die Größe des zusammenhängenden Teils oder Abschnittes durch einen Größenwert spezifiziert ist, der in dem Eingabekontrollregister gespeichert ist.

10. Elektronische Nachschlage- oder Verweiseinrichtung (10) nach Anspruch 9, wobei der Befehl auf einen Ort nur innerhalb des zusammenhängenden Teils oder Abschnitts des Arrays an adressierbaren Registern zugreift.

11. Elektronische Nachschlage- oder Verweiseinrichtung (10) nach Anspruch 8, wobei sie ferner aufweist:
(f) ein Eingabekontrollregister (109), das mit der logischen Schaltung wirkverbunden ist, wobei ein Toranklopfwert in dem Eingabekontrollregister gespeichert ist, wobei nach Initiierung des Befehls der Toranklopfwert dekrementiert wird und nur, nachdem der Toranklopfwert einem zuvor definierten Minimumwert gleicht, das upgedatete Datum oder der upgedatete Datensatz in eines der adressierbaren Register geschrieben wird.

12. Elektronische Nachschlage- oder Verweiseinrichtung (10) nach Anspruch 1, wobei sie ferner aufweist:
(e) ein zweites Array (109) an Registern, die mit dem ersten Array wirkverbunden sind; wobei die Operanten das zweite Array an Registern referenzieren; wobei die Register des zweiten Array eine Vielzahl von Adressoperanten speichern, die eine Vielzahl an Orten des ersten Arrays referenzieren und **gekennzeichnet sind dadurch**, dass der zugängliche Bereich der adressierbaren Register (101) **durch** den Größenwert spezifiziert ist.

13. Elektronische Nachschlage- oder Verweiseinrichtung (10) nach Anspruch 12, wobei die Adressoperanten, wie sie jeweils in dem zweiten Array gespeichert sind, berechnet werden basierend auf dem Eingabebefehlparameter-Modulus des Größenwerts.

14. Elektronische Nachschlage- oder Verweiseinrichtung (10) nach Anspruch 12, wobei sie ferner aufweist:
(f) eine Verarbeitungsschaltung (102), die nach Verarbeiten eines einzelnen Aufrufs eines Befehls, der auf dem Eingabebefehlparameter basiert, eine Vielzahl an Daten verarbeitet, die an den Orten gespeichert sind.

15. Elektronische Nachschlage- oder Verweiseinrichtung (10) nach Anspruch 14, wobei ein einzelner Aufruf des Befehls auf eine Vielzahl an adressierbaren Registern des zugänglichen Bereichs zugreift und basierend auf dem Eingabebefehlparameter der Befehl für das wenigstens eine adressierbare Register und für alle Adressoperanten: ein Datum oder einen Datensatz der zuvor in wenigstens einem der Register gespeicherten Daten oder Datensätze liest, das Datum oder den Datensatz updatet, wodurch ein upgedatetes Datum oder ein upgedateter Datensatz produziert wird, und das upgedatete Datum oder den upgedateten Datensatz in das wenigstens eine Register schreibt.

16. Elektronische Nachschlage- oder Verweiseinrichtung (10) nach Anspruch 15, wobei der einzelne Aufruf des Befehls, der auf das wenigstens eine Register des Arrays referenziert, dafür sorgt, dass wenigstens zwei der Adressoperanten identisch sind.

17. Elektronische Nachschlage- oder Verweiseinrichtung (10) nach Anspruch 15, wobei sie ferner aufweist:
(g) einen Takt (113), der eine Vielzahl an Taktpulsen bereitstellt, wobei die Verarbeitungsschaltung den Befehl während wenigstens drei Taktpulsen verarbeitet, wobei ein neuer Aufruf des Befehls ein Verarbeiten durch die Verarbeitungsschaltung bei aufeinanderfolgenden Taktpulsen beginnt, so dass es einen Befehlsdurchsatz eines Befehls je Taktpuls gibt.

18. Elektronische Nachschlage- oder Verweiseinrichtung (10) nach Anspruch 1, wobei sie ferner aufweist:
(e) einen Takt (113), der operativ an der Verarbeitungsschaltung angeordnet ist, eine Vielzahl an Taktpulsen bereitstellt, wobei der Befehlsdurchsatz als eine Anzahl an Befehlen, die je Taktpuls verarbeitet werden, von der Anzahl der Adressoperanten unabhängig ist.

19. Elektronische Nachschlage- oder Verweiseinrichtung (10) nach Anspruch 18, wobei der Befehlsdurchsatz ein Befehl je Taktpuls ist.

20. Elektronische Nachschlage- oder Verweiseinrichtung (10) nach Anspruch 18, wobei sie ferner den Schritt aufweist:
(f) eines Eingabekontrollregisters (105), das mit der Verarbeitungsschaltung wirkverbunden ist, wobei ein Toranklopfwert in dem Eingabekontrollregister gespeichert wird und nach Erhalt des Befehls der Toranklopfwert dekrementiert wird und nur, wenn der Toranklopfwert einem zuvor definierten Minimumwert gleicht, das Datum oder der Datensatz in eines der adressierbaren Register (101) geschrieben wird.

## Revendications

1. Un dispositif de consultation électronique mis en oeuvre sur une puce semi-conducteur, le dispositif de consultation électronique, comprenant :
(a) une zone de registres adressables (101) stockant une pluralité de données ;
(b) une pluralité de registres d'entrée (105,115) opérationnellement connectée à ladite zone de registres adressables (101), dans lesquels les registres d'entrées (105,115) sont configurés pour stocker des paramètres de commande d'entrée spécifiant une commande et une pluralité d'opérandes de ladite commande, **caractérisé en ce que** lesdits opérandes incluant une pluralité d'opérandes d'adresses référençant une pluralité de registre non-consécutifs de ladite zone de registres adressables (101) ;
(c) un circuit de traitement (102) configuré pour traiter, basé sur lesdits paramètres de commande d'entrée spécifiant une commande, lesdites données; dans lequel une instance unique de ladite commande accède auxdits registres non consécutifs de ladite zone de registres adressables (101), et basée sur ledit paramètre de commande d'entrée desdits circuits de commande (102) pour tous lesdits opérandes d'adresses : lecture d'une donnée desdites données précédemment stockées dans lesdits registres adressables (101), mise à jour de ladite donnée en produisant ainsi une donnée mise à jour, et écriture de ladite donnée mise à jour dans un des registres adressables (101); et
(d) un circuit logique (103) opérationnellement relié entre lesdits registres d'entrées (105, 115) et ledit circuit de traitement (102), ledit circuit logique (103) étant configuré pour fournir un signal logique de sortie audit circuit de traitement (102) indiquant que, si n'importe lesquels desdits opérandes d'adresses sont identiques, supportant ainsi au moins deux desdits opérandes d'adresses qui sont identiques.

2. Le dispositif de consultation électronique (10), selon la revendication 1, dans lequel ledit circuit de traitement basé sur ledit signal logique de sortie, traite n'importe lequel desdits opérandes d'adresses identiques avant l'écriture de ladite donnée mises à jour, dans l'un desdits registres non-consécutifs.

3. Le dispositif de consultation électronique (10), selon la revendication 1, comprenant en plus:
(e) une horloge (113) qui fournit une pluralité d'impulsions d'horloge, dans laquelle ledit circuit de traitement traite ladite commande durant au moins trois impulsions d' horloge, dans lequel un nouveau cas de ladite commande commence le traitement par ledit circuit de traitement sur une impulsion d'horloge consécutive, tel qu' il y ait une sortie de commande d'au moins une commande par impulsion d'horloge.

4. Le dispositif de consultation électronique (10), selon la revendication 1, dans lequel ladite commande met en place une corbeille d'un histogramme par une valeur incrémentale.

5. Le dispositif de consultation électronique (10), selon la revendication 1, dans lequel ladite commande incrémente une corbeille d'un histogramme par une valeur incrémentale.

6. Le dispositif de consultation électronique (10), selon la revendication 1, dans lequel ladite commande compare ladite donnée avec au moins une valeur incrémentale, ladite commande calcule la valeur minimale sélectionnée à partir du groupe de ladite donnée et de ladite au moins une valeur incrémentale et ladite commande écrit ladite valeur minimale comme ladite valeur mise à jour.

7. Le dispositif de consultation électronique (10), selon la revendication 1, dans lequel ladite commande compare ladite donnée avec au moins une valeur incrémentale, ladite commande calcule la valeur maximale sélectionnée à partir du groupe de ladite donnée et de ladite au moins une valeur incrémentale et écrit ladite valeur maximale comme une donnée mise à jour.

8. Le dispositif de consultation électronique (10), selon la revendication 1, comprenant en plus:
(e) une seconde zone de registre (109) opérationnellement connectée à ladite zone;
dans lequel lesdits registres de ladite seconde zone stockent une pluralité de localisations référençant une partie de ladite zone.

9. Le dispositif de consultation électronique (10), selon la revendication 8, dans lequel ladite partie est contiguë comprenant en plus:
(f) un registre de contrôle d'entrée (109) opérationnellement connecté audit circuit logique, dans lequel la taille de ladite partie contiguë est déterminée par une valeur de taille stockée dans ledit registre de contrôle d'entrée.

10. Le dispositif de consultation électronique (10), selon la revendication 9, dans lequel ladite commande accède à une localisation seulement dans ladite partie contiguë de ladite zone de registres adressables.

11. Le dispositif de consultation électronique (10), selon la revendication 8, comprenant en plus (f) un registre de contrôle d'entrée (109) opérationnellement connecté audit circuit logique, dans lequel une valeur de déclenchement est stockée dans ledit registre de contrôle d'entrée, dans lequel sur ordre de ladite commande, ladite valeur de déclenchement est décrémentée et, seulement lorsque ladite valeur de déclenchement égale une valeur minimum définie précédemment, ladite valeur mise à jour est écrite dans un desdits registres adressables.

12. Le dispositif de consultation électronique (10), selon la revendication 1, comprenant en plus:
(e) une seconde zone (109) de registres opérationnellement connectée audit premier déploiement; dans lequel lesdits opérandes référencent ladite seconde zone de registres;
dans laquelle lesdits registres de ladite seconde zone stockent une pluralité d'opérandes d'adresses référençant une pluralité de localisations de ladite première zone et **caractérisés en ce que** la zone accessible des registres adressables (101) est spécifiée par ladite valeur de taille.

13. Le dispositif de consultation électronique (10), selon la revendication 12, dans lequel lesdits opérandes d'adresses tels que stockés respectivement dans ladite seconde zone sont calculés sur la base dudit paramètre de commande d'entrée modulo ladite valeur de taille.

14. Le dispositif de consultation électronique (10), selon la revendication 12, comprenant en plus:
(f) un circuit de traitement (102) qui lors du traitement d'un cas unique d'une commande basée sur ledit paramètre de commande d'entrée traite une pluralité de données stockées dans lesdites localisations.

15. Le dispositif de consultation électronique (10), selon la revendication 14, dans lequel un seul cas de ladite commande accède à une pluralité desdits registres adressable de ladite zone accessible, et basé sur ledit paramètre de commande d'entrée, ladite commande pour ledit au moins un registre adressable et pour tous lesdits opérandes d'adresses : lecture d'une donnée desdites données précédemment stockées dans ledit au moins un registre, mise à jour de ladite donnée produisant ainsi une donnée mise à jour, et écriture de ladite donnée mise à jour dans ledit au moins un registre.

16. Le dispositif de consultation électronique (10), selon la revendication 15, dans lequel le cas unique de commande référençant le au moins un registre du réseau supporte au moins deux desdits opérandes d'adresses étant identiques.

17. Le dispositif de consultation électronique (10), selon la revendication 15, comprenant en plus:
(g) une horloge (113) qui fournit une pluralité d'impulsions d'horloge, dans lequel ledit circuit de traitement traite ladite commande pendant au moins trois impulsions d'horloge, dans lequel un nouveau cas de ladite commande commence à traiter par ledit circuit de traitement sur les impulsions d'horloge consécutives pour qu'il y ait une sortie de commande d'une commande par impulsion d'horloge.

18. Le dispositif de consultation électronique (10), selon la revendication 1, comprenant en plus:
(e) une horloge (113) opérationnellement attachée audit circuit de traitement qui fournit une pluralité d'impulsions d'horloge, dans lequel la sortie de commande dans un nombre de commande traité en une impulsion d'horloge est indépendant du nombre desdits opérandes d'adresses.

19. Le dispositif de consultation électronique (10), selon la revendication 18, dans lequel ladite sortie de commande est une commande par impulsion d'horloge.

20. Le dispositif de consultation électronique (10), selon la revendication 18, comprenant en plus les étapes de (f) un registre de contrôle d'entrée (105) opérationnellement connecté audit circuit de traitement, dans lequel une valeur de déclenchement est stockée dans un registre de contrôle d'entrée, et sur réception de ladite commande, ladite valeur de déclenchement est décrémentée et seulement lorsque ladite valeur de déclenchement égale une valeur minimum définie précédemment, ladite valeur est écrite dans un desdits registres adressables (101).
